# EUROPÄISCHE PATENTSCHRIFT

(11) **EP 4 279 794 B1**
(45) Veröffentlichungstag und Bekanntmachung des Hinweises auf die Patenterteilung: **02.07.2025**
(21) Anmeldenummer: 22173969.1
(22) Anmeldetag: 18.05.2022
(51) Int. Cl.: F17C 3/08, F17C 13/04

(54) **KRYOTANK**
CRYOTANK
RÉSERVOIR CRYOGÉNIQUE

(43) Veröffentlichungstag der Anmeldung: 22.11.2023
(73) Patentinhaber: MAGNA Energy Storage Systems GesmbH, 8261 Sinabelkirchen (AT)
(72) Erfinder: HUMENBERGER, Harald, 8181 St. Ruprecht (AT); PUCHLEITNER, Rainer, 8052 Graz (AT); ZINK, Stefan, 8402 Werndorf (AT)
(74) Vertreter: Zangger, Bernd

(56) Entgegenhaltungen:
- EP-A1- 3 056 794
- WO-A2-2021/052994
- US-A- 4 472 946
- US-A- 5 651 473
- US-A1- 2005 139 600
- US-B2- 8 104 296

## Beschreibung

### Gebiet der Erfindung

Die vorliegende Erfindung betrifft einen Kryotank, umfassend einen Innenbehälter zur Aufnahme eines tiefkalten Mediums, insbesondere Wasserstoff und einen den Innenbehälter umgebenden Außenbehälter.

### Stand der Technik

Kryotanks sind an sich bekannt und werden zur Speicherung tiefkalter Flüssigkeiten, insbesondere von flüssigem Wasserstoff, eingesetzt. Das Medium kann insbesondere als Treibstoff für ein fahrendes oder fliegendes Fortbewegungsmittel eingesetzt werden, beispielsweise für ein Kraftfahrzeug, Flugzeug oder eine Weltraumrakete. Kryotanks weisen üblicherweise einen Innenbehälter auf, in den das im Tank gespeicherte Medium, also insbesondere der Wasserstoff, aufgenommen ist und einen den Innenbehälter umgebenden Außenbehälter. Zwischen Innenbehälter und Außenbehälter ist üblicherweise ein Vakuum eingerichtet, um die Wärmeübertragung von außen nach innen zu verringern. Solche Kryotanks können zylindrisch ausgebildet sein.

Erforderliche Funktionskomponenten eines solchen Kryotanks, wie zum Beispiel Ventile, Steuerungskomponenten und Rohre werden beispielsweise stirnseitig am Kryotank angeordnet, außerhalb des Außenbehälters oder im Vakuumzwischenraum zwischen Außenbehälter und Innenbehälter. Bei einer stirnseitigen Anordnung der Funktionskomponenten ist es üblicherweise erforderlich, die axiale Länge des Kryotanks, zumindest des Innenbehälters zu verkürzen, sodass weniger Volumen für die Speicherung des Mediums zur Verfügung steht.

Aus der WO 2021/052994 A2 ist ein kryogener Druckbehälter zur Speicherung von Brennstoff in einem Kraftfahrzeug bekannt, mit einem Innenbehälter und einem Außenbehälter, wobei zwischen dem Innenbehälter und dem Außenbehälter zumindest bereichsweise ein evakuierter Raum angeordnet ist. Im Innenbehälter kann mindestens ein elektrisches Heizelement zur Erwärmung des Brennstoffs vorgesehen sein.

Die US 8 104 296 B2 offenbart einen kryogenen Lagertank, umfassend einen Kryoraum, der durch einen wärmeisolierten Behälter zur Lagerung eines kryogenen Fluids definiert ist; eine Trennwand, die den Kryoraum in einen Hauptspeicherraum und einen Hilfsraum unterteilt; eine Leitung, die den Hauptspeicherraum mit einer Kupplung außerhalb des Speichertanks verbindet, ein Ventil, das innerhalb des Kryoraums angeordnet und mit einem ersten Fluiddurchgang durch die Trennwand verbunden ist, wobei das Ventil ein Ventilelement umfasst, das durch Fluidkräfte innerhalb des Kryoraums betätigbar ist, um sich zwischen einer offenen Position und einer geschlossenen Position zu bewegen; und einen zweiten Fluiddurchgang durch die Trennwand, wobei der zweite Fluiddurchgang einen eingeschränkten Strömungsbereich umfasst, der so dimensioniert ist, dass er einen Querschnittsströmungsbereich aufweist, der kleiner ist als derjenige der Leitung, so dass es einen nachweisbaren Anstieg des Gegendrucks in der Leitung gibt, wenn das kryogene Fluid in den Hauptspeicherraum eingeführt wird und der Hauptspeicherraum mit verflüssigtem Gas gefüllt ist.

Dokument US 2005/139600 A1 lehrt einen Behälter zur Aufnahme eines kryogenen Fluids, wobei der Behälter umfasst: ein inneres Gefäß, das einen kryogenen Raum definiert und eine horizontale, längliche Achse aufweist; ein äußeres Gefäß, das das innere Gefäß umgibt und einen evakuierbaren Raum zwischen dem äußeren Gefäß und dem inneren Gefäß bildet; und eine Struktur zum Stützen des inneren Behälters innerhalb des äußeren Behälters, wobei die Struktur umfasst: eine Leitung, die an einem ersten Punkt an einer mit dem inneren Behälter verbundenen Halterung für den inneren Behälter und an einem zweiten Punkt an einer Halterung für den äußeren Behälter für den äußeren Behälter befestigt ist, wobei die Leitung in der Lage ist, einen wesentlichen Teil der axialen Lasten zu tragen, die auf den inneren Behälter in einer Richtung parallel zu der horizontalen Achse wirken, und wobei das kryogene Fluid durch die Leitung in den und/oder aus dem kryogenen Raum befördert werden kann; und mindestens eine nicht-metallische Stütze, die sich zwischen dem inneren Behälter und dem äußeren Behälter erstreckt, wobei die nicht-metallische Stütze eine Lagerfläche bereitstellt, die mit jeweiligen gegenüberliegenden, dem inneren Behälter und dem äußeren Behälter zugeordneten Oberflächen verbunden ist, um im Wesentlichen alle radialen Lasten quer zu der horizontalen Achse von dem inneren Behälter auf den äußeren Behälter zu übertragen, und wobei die nicht-metallische Stütze fest an den gegenüberliegenden, einander zugewandten Oberflächen angebracht ist, wodurch die nicht-metallische Stütze einen wesentlichen Teil der axialen Lasten tragen kann.

### Zusammenfassung der Erfindung

Es ist eine Aufgabe der Erfindung, einen Kryotank anzugeben, der bei einem vorgegebenen Bauraum trotz Verbauung von Funktionskomponenten ein möglichst großes Innenbehältervolumen aufweist.

Die Lösung der Aufgabe erfolgt durch einen Kryotank mit den Merkmalen gemäß Anspruch 1.

Der Kryotank umfasst einen Innenbehälter zur Aufnahme eines tiefkalten Mediums, insbesondere Wasserstoff, und einen den Innenbehälter umgebenden Außenbehälter, wobei zwischen dem Innenbehälter und dem Außenbehälter ein Vakuumraum eingerichtet ist, wobei sich eine Tasche zumindest vom Vakuumraum aus in den Innenraum des Innenbehälters hinein erstreckt, wobei in der Tasche eine oder mehrere Funktionskomponenten angeordnet sind, wie zum Beispiel ein oder mehrere Wärmetauscher, Ventile, Steuerungskomponenten und/oder Rohre. Erfindungsgemäß weist ein Kryotank somit zumindest eine Tasche auf, also eine taschenartige Vertiefung oder Einbuchtung, mit einem Boden am Ende der Tasche, also innerhalb des üblichen Volumens des Innenbehälters. Die Tasche erstreckt sich daher von außerhalb des Innenbehälters, also zumindest vom Vakuumraum aus, optional auch vom Außenbehälter oder von außerhalb des Außenbehälters aus, in die übliche Geometrie des Innenbehälters hinein, um ein Volumen das üblicherweise zum Innenraum des Innenbehälters gehört, abzugrenzen und als Teil des Innenraums der Tasche topologisch zu einem Außenraum des Innenbehälters zu machen. Der Innenraum der Tasche ist dabei von außerhalb des Innenbehälters zugänglich, bevorzugt vom Vakuumraum aus. Dabei ist der Durchmesser der Tasche kleiner als der Durchmesser des Innenbehälters an der Stelle, an der sich die Tasche in den Innenbehälter hinein erstreckt. Dadurch geht weniger Volumen des Innenbehälters verloren, als wenn der gesamte Innenbehälter, über dessen gesamten Durchmesser, verkürzt wäre.

In der Tasche sind Funktionskomponenten angeordnet. Die Funktionskomponenten können insbesondere Nebensystemkomponenten sein. Die Funktionskomponenten können somit auch innerhalb des üblichen Innenraums des Innenbehälters angeordnet sein und sind dort, durch die begrenzende Wand der Tasche, vom Medium im Innenbehälter getrennt und geschützt.

Das verdrängte Volumen einer sich in den Innenbehälter erstreckenden Tasche zur Unterbringung der erforderlichen Komponenten ist kleiner als bei einer Reduktion der Länge des gesamten Zylinders des Innenbehälters.

Erfindungsgemäß führen zumindest vier Rohrleitungen von außerhalb der Tasche zu einer in der Tasche angeordneten Funktionskomponente, nämlich zu einem in der Tasche angeordneten Wärmetauscher. Dabei ist zumindest eine Rohrleitung zur Zuführung und eine Rohrleitung zur Ableitung des im Innenbehälter aufgenommenen tiefkalten Mediums eingerichtet und zumindest eine Rohrleitung zur Zuführung und eine Rohrleitung zur Ableitung eines Temperierfluids eingerichtet. Der Wärmetauscher dient somit der Temperierung des im Innenbehälter aufgenommenen tiefkalten Mediums, insbesondere Wasserstoff, wobei dieses Medium aus einem Bereich außerhalb der Tasche und bevorzugt aus einem Bereich außerhalb des Innenbehälters in die Tasche geführt wird, um dort temperiert zu werden.

Weiterbildungen der Erfindung sind in den abhängigen Ansprüchen, der Beschreibung sowie den beigefügten Zeichnungen angegeben.

Vorzugsweise wird die Tasche zumindest abschnittsweise durch ein Hüllrohr gebildet, dass sich in den Innenraum des Innenbehälters hinein erstreckt. Bevorzugt ist die Tasche zumindest abschnittsweise zylinderförmig. An ihrem Ende ist die Tasche geschlossen, weist also bevorzugt am Ende des Zylinders einen Boden auf.

Bevorzugt ist die Tasche durch einen Deckel, insbesondere zum Vakuumraum hin oder nach außerhalb des Außenbehälters, verschlossen. Der Deckel ist bevorzugt ein separates Bauteil.

Bevorzugt erfolgt eine Zuführung des im Innenbehälter aufgenommenen tiefkalten Mediums, insbesondere Wasserstoff, zu einer Funktionskomponente in der Tasche durch eine Rohrleitung von Außerhalb des Innenbehälters, vom Vakuumraum oder vom Raum außerhalb des Außenbehälters durch den Deckel der Tasche.

Bevorzugt werden alle Rohrleitungen, die von außerhalb der Tasche zu einer in der Tasche angeordneten Funktionskomponente führen, durch eine Öffnung im Deckel der Tasche geführt, bevorzugt durch eine der jeweiligen Rohrleitung zugeordnete Öffnung im Deckel der Tasche geführt.

Bevorzugt ist die Tasche parallel zur Längsmittelachse des Kryotanks ausgerichtet oder normal auf die Längsmittelachse des Kryotanks ausgerichtet.

Vorzugsweise erstreckt sich die Tasche von einer stirnseitigen Endkappe des Innenbehälters aus, oder von einer Mantelfläche des Innenbehälters aus, nach innen, bevorzugt in Richtung zu einem Mittelpunkt des Innenbehälters hin.

Die Tasche ist besonders bevorzugt zur Längsmittelachse des Kryotanks koaxial angeordnet.

Besonders bevorzugt erstreckt sich die Tasche bis zum Außenbehälter. Die Tasche kann zur Aufhängung des Innenbehälters am Außenbehälter eingerichtet sein. Die Tasche kann eine polare Aufhängung des Innenbehälters am Außenbehälter bilden.

Bevorzugt ist zumindest eine Funktionskomponente so in der Tasche angeordnet, dass die Funktionskomponente im Wesentlichen parallel zu einer Seitenwand der Tasche verläuft. Insbesondere kann zumindest ein, bevorzugt zylindrischer bzw. stabförmiger, Wärmetauscher und/oder zumindest ein Rohr parallel zur Tasche bzw. parallel zu den Seitenwänden der Tasche verlaufen.

Bevorzugt weist die Tasche eine Wärmeisolierung zum Schutz der in der Tasche angeordneten Funktionskomponenten auf, insbesondere eine Multi-Layer Insulation (MLI).

### Kurzbeschreibung der Zeichnungen

Die Erfindung wird im Folgenden beispielhaft unter Bezugnahme auf die Zeichnungen beschrieben.
- Fig. 1: ist eine Explosionsdarstellung eines stirnseitigen Abschnitts eines erfindungsgemäßen Kryotanks, dargestellt ohne Außenbehälter.
- Fig. 2: ist eine Ansicht des Kryotanks gemäß Fig. 1 von vorne.
- Fig. 3: ist eine Schnittansicht des Kryotanks gemäß Schnitt A-A der Fig. 2, dargestellt mit Außenbehälter.

### Detaillierte Beschreibung der Erfindung

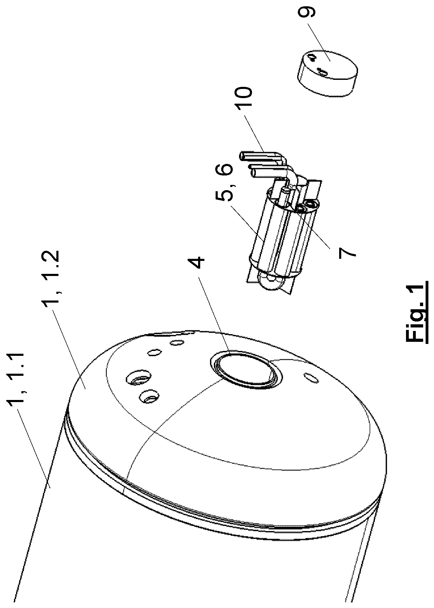

In den Fig. 1-3 ist ein erfindungsgemäßer Kryotank dargestellt.

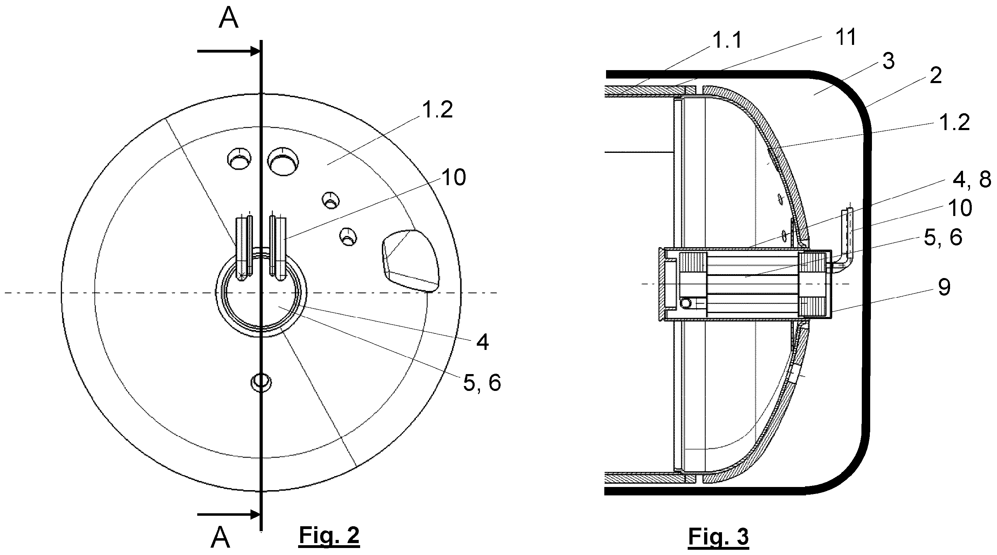

Der Kryotank umfasst einen Innenbehälter 1 zur Aufnahme eines tiefkalten Mediums, insbesondere Wasserstoff, und einen den Innenbehälter 1 umgebenden Außenbehälter 2, wobei zwischen dem Innenbehälter 1 und dem Außenbehälter 2 ein Vakuumraum 3 eingerichtet ist. Außen am Innenbehälter 1 ist zudem eine Behälterisolierung 11 aufgebracht (dargestellt in Fig. 3).

Der Innenbehälter 1 umfasst eine Mantelfläche 1.1 des Innenbehälters 1 und eine stirnseitige Endkappe 1.2 des Innenbehälters 1.

Eine Tasche 4 erstreckt sich vom Vakuumraum 3 aus in den Innenraum des Innenbehälters 1 hinein, bildet also eine Einbuchtung in das normalerweise vom Innenbehälter 1 umschlossene Volumen, das im dargestellten Beispiel im Wesentlichen einen Zylinder mit konvexen Stirnseiten bildet.

In der Tasche 4 ist zumindest eine Funktionskomponente 5 angeordnet, nämlich ein Wärmetauscher 6. Der Wärmetauscher 6 ist innerhalb eines Raumbereichs angeordnet, der üblicherweise im Innenraum des Innenbehälters liegt, jedoch durch die Tasche 4 vom Medium im Innenraum getrennt ist. Die Tasche 4 ist im Wesentlichen zylinderförmig. Der Durchmesser der Tasche 4 ist kleiner als der Durchmesser des Innenbehälters 1, bevorzugt kleiner als die Hälfte des Durchmessers des Innenbehälters 1.

Die Tasche 4 wird abschnittsweise durch eine zylindrische Hülse, nämlich Hüllrohr 8, gebildet, dass sich in den Innenraum des Innenbehälters 1 hinein erstreckt. Das Hüllrohr 8 weist einen Boden auf, der ein separates Bauteil oder einstückig mit dem Hüllrohr 8 ausgebildet sein kann.

Die Tasche 4 ist durch einen Deckel 9 zum Vakuumraum 3 hin verschlossen.

Die Tasche 4 ist parallel zur Längsmittelachse des Kryotanks ausgerichtet, nämlich koaxial zur Längsmittelachse des Kryotanks. Die Tasche 4 erstreckt sich von einer stirnseitigen Endkappe 1.2 des Innenbehälters 1 nach innen, in Richtung zu einem Mittelpunkt des Innenbehälters 1 hin.

Eine Zuführung des im Innenbehälter 1 aufgenommenen tiefkalten Mediums, insbesondere Wasserstoff, zum Wärmetauscher 6 in der Tasche 4 erfolgt durch eine Rohrleitung 10 von Außerhalb des Innenbehälters 1, nämlich durch die Rohrleitung 10 im Vakuumraum 3 und durch eine Öffnung im Deckel 9 der Tasche 4.

Eine weitere Rohrleitung 10 dient der Ableitung des im Innenbehälter 1 aufgenommenen tiefkalten Mediums. Zusätzlich sind zwei Rohrleitungen 10 von außerhalb der Tasche 4 zur Zuführung und zur Ableitung eines Temperierfluids bzw. Kühlmediums eingerichtet.

Alle Rohrleitungen 10 sind durch, der jeweiligen Rohrleitung 10 zugeordnete Öffnungen im Deckel 9 der Tasche 4 geführt.

Die Tasche 4, insbesondere das Hüllrohr 8, weist eine Wärmeisolierung zum Schutz der in der Tasche 4 angeordneten Funktionskomponenten 5, insbesondere des Wärmetauschers 6, auf, insbesondere eine Multi-Layer Insulation (MLI).

### Bezugszeichenliste

- 1: Innenbehälter
- 1.1: Mantelfläche des Innenbehälters
- 1.2: Endkappe des Innenbehälters
- 2: Außenbehälter
- 3: Vakuumraum
- 4: Tasche
- 5: Funktionskomponente
- 6: Wärmetauscher
- 7: Rohr
- 8: Hüllrohr
- 9: Deckel
- 10: Rohrleitung
- 11: Behälterisolierung

## Patentansprüche

1. Kryotank, umfassend einen Innenbehälter (1) zur Aufnahme eines tiefkalten Mediums, insbesondere Wasserstoff, und einen den Innenbehälter (1) umgebenden Außenbehälter (2), wobei zwischen dem Innenbehälter (1) und dem Außenbehälter (2) ein Vakuumraum (3) eingerichtet ist,
wobei sich eine Tasche (4) zumindest vom Vakuumraum (3) aus in den Innenraum des Innenbehälters (1) hinein erstreckt, wobei in der Tasche (4) eine oder mehrere Funktionskomponenten (5) angeordnet sind, wie zum Beispiel ein oder mehrere Wärmetauscher (6), Ventile, Steuerungskomponenten und/oder Rohre (7),
**dadurch gekennzeichnet, dass** zumindest vier Rohrleitungen (10) von außerhalb der Tasche (4) zu einer in der Tasche (4) angeordneten Funktionskomponente (5) führen, nämlich zu einem in der Tasche angeordneten Wärmetauscher (6), wobei zumindest eine Rohrleitung (10) zur Zuführung und eine Rohrleitung (10) zur Ableitung des im Innenbehälter (1) aufgenommenen tiefkalten Mediums eingerichtet ist und zumindest eine Rohrleitung (10) zur Zuführung und eine Rohrleitung (10) zur Ableitung eines Temperierfluids eingerichtet ist.

2. Kryotank nach Anspruch 1,
**dadurch gekennzeichnet, dass** die Tasche (4) zumindest abschnittsweise durch ein Hüllrohr (8) gebildet wird, dass sich in den Innenraum des Innenbehälters (1) hinein erstreckt und/oder dass die Tasche (4) zumindest abschnittsweise zylinderförmig ist.

3. Kryotank nach zumindest einem der vorhergehenden Ansprüche, **dadurch gekennzeichnet, dass** die Tasche (4) durch einen Deckel (9) verschlossen ist.

4. Kryotank nach zumindest einem der vorhergehenden Ansprüche, **dadurch gekennzeichnet, dass** eine Zuführung des im Innenbehälter (1) aufgenommenen tiefkalten Mediums, insbesondere Wasserstoff, zu einer Funktionskomponente (5) in der Tasche (4) durch eine Rohrleitung (10) von Außerhalb des Innenbehälters (1), nämlich vom Vakuumraum (3) oder vom Raum außerhalb des Außenbehälters (2) durch den Deckel (9) der Tasche erfolgt.

5. Kryotank nach den Ansprüchen 4,
**dadurch gekennzeichnet, dass** alle Rohrleitungen (10) die von außerhalb der Tasche (4) zu einer in der Tasche (4) angeordneten Funktionskomponente (5) führen, durch eine Öffnung im Deckel (9) der Tasche (4) geführt sind, vorzugsweise durch eine der jeweiligen Rohrleitung (10) zugeordnete Öffnung im Deckel (9) der Tasche (4) geführt sind.

6. Kryotank nach zumindest einem der vorhergehenden Ansprüche, **dadurch gekennzeichnet, dass** die Tasche (4) parallel zur Längsmittelachse des Kryotanks ausgerichtet ist oder normal auf die Längsmittelachse des Kryotanks ausgerichtet ist.

7. Kryotank nach Anspruch 6,
**dadurch gekennzeichnet, dass** die Tasche (4) zur Längsmittelachse des Kryotanks koaxial angeordnet ist.

8. Kryotank nach zumindest einem der vorhergehenden Ansprüche, **dadurch gekennzeichnet, dass** die Tasche (4) sich bis zum Außenbehälter (2) erstreckt und/oder dass die Tasche (4) zur Aufhängung des Innenbehälters (1) am Außenbehälter (2) eingerichtet ist

9. Kryotank nach zumindest einem der vorhergehenden Ansprüche, **dadurch gekennzeichnet, dass** sich die Tasche (4) von einer stirnseitigen Endkappe (1.2) des Innenbehälters (1) oder von einer Mantelfläche (1.1) des Innenbehälters (1) aus nach innen erstreckt, bevorzugt in Richtung zu einem Mittelpunkt des Innenbehälters (1) hin.

10. Kryotank nach zumindest einem der vorhergehenden Ansprüche, **dadurch gekennzeichnet, dass** zumindest eine Funktionskomponente (5) so in der Tasche (4) angeordnet ist, dass die Funktionskomponente (5) im Wesentlichen parallel zu einer Seitenwand der Tasche (4) liegt, insbesondere zumindest ein im Wesentlichen zylindrischer Wärmetauscher (6) und/oder zumindest ein Rohr (7).

11. Kryotank nach zumindest einem der vorhergehenden Ansprüche, **dadurch gekennzeichnet, dass** die Tasche (4) eine Wärmeisolierung zum Schutz der in der Tasche (4) angeordneten Funktionskomponenten (5) aufweist, insbesondere eine Multi-Layer Insulation (MLI).

## Claims

1. Cryogenic tank comprising an inner container (1) for holding a cryogenic medium, in particular hydrogen, and an outer container (2) surrounding the inner container (1), wherein a vacuum space (3) is set up between the inner container (1) and the outer container (2), wherein a pocket (4) extends at least from the vacuum space (3) into the interior space of the inner container (1), wherein one or more functional components (5) are arranged in the pocket (4), such as one or more heat exchangers (6), valves, control components and/or tubes (7), **characterized in that** at least four pipes (10) lead from outside the pocket (4) to a functional component (5) arranged in the pocket (4), namely to a heat exchanger (6) arranged in the pocket (4), wherein at least one pipe (10) is set up for the supply and one pipe (10) is set up for the discharge of the cryogenic medium held in the inner container (1) and at least one pipe (10) is set up for the supply and one pipe (10) is set up for the discharge of a temperature control fluid.

2. Cryogenic tank according to Claim 1,
**characterized in that** the pocket (4) is formed at least in some section or sections by a jacket tube (8) which extends into the interior space of the inner container (1) and/or **in that** the pocket (4) is cylindrical at least in some section or sections.

3. Cryogenic tank according to at least one of the preceding claims, **characterized in that** the pocket (4) is closed by a cover (9).

4. Cryogenic tank according to at least one of the preceding claims, **characterized in that** the cryogenic medium, in particular hydrogen, held in the inner container (1) is supplied to a functional component (5) in the pocket (4) through a pipe (10) from the outside of the inner container (1), namely from the vacuum space (3) or from the space outside the outer container (2)through the cover (9) of the pocket.

5. Cryogenic tank according to Claim 4,
**characterized in that** all the pipes (10), which lead from outside the pocket (4) to a functional component (5) arranged in the pocket (4), iare passed through an opening in the cover (9) of the pocket (4), preferably being passed through an opening, assigned to the respective pipe (10), in the cover (9) of the pocket (4).

6. Cryogenic tank according to at least one of the preceding claims, **characterized in that** the pocket (4) is aligned parallel to the longitudinal central axis of the cryogenic tank or is aligned so as to be normal to the longitudinal central axis of the cryogenic tank.

7. Cryogenic tank according to Claim6,
**characterized in that** the pocket (4) is arranged coaxially with the longitudinal central axis of the cryogenic tank.

8. Cryogenic tank according to at least one of the preceding claims, **characterized in that** the pocket (4) extends as far as the outer container (2), and/or **in that** the pocket (4) is designed for suspension of the inner container (1) on the outer container (2)

9. Cryogenic tank according to at least one of the preceding claims, **characterized in that** the pocket (4) extends inwards from an end cap (1.2) at the end of the inner container (1) or from a lateral surface (1.1) of the inner container (1), preferably in the direction of a central point of the inner container (1).

10. Cryogenic tank according to at least one of the preceding claims, **characterized in that** at least one functional component (5) is arranged in the pocket (4) in such a way that the functional component (5) lies substantially parallel to a side wall of the pocket (4), in particular at least one substantially cylindrical heat exchanger (6) and/or at least one tube (7).

11. Cryogenic tank according to at least one of the preceding claims, **characterized in that** the pocket (4) has thermal insulation for protecting the functional components (5) arranged in the pocket (4), in particular multi-layer insulation (MLI).

## Revendications

1. Réservoir cryogénique comprenant un récipient intérieur (1) destiné à contenir un fluide cryogénique, en particulier de l'hydrogène, et un récipient extérieur (2) entourant le récipient intérieur (1), un espace sous vide (3) étant aménagé entre le récipient intérieur (1) et le récipient extérieur (2),
une poche (4) s'étendant au moins depuis l'espace sous vide (3) jusque dans l'espace intérieur du récipient intérieur (1), un ou plusieurs composants fonctionnels (5) étant agencés dans la poche (4), tels qu'un ou plusieurs échangeurs de chaleur (6), vannes, composants de commande et/ou tuyaux (7),
**caractérisé en ce qu'**au moins quatre conduites (10) mènent de l'extérieur de la poche (4) à un composant fonctionnel (5) agencé dans la poche (4), à savoir à un échangeur de chaleur (6) agencé dans la poche, au moins une conduite (10) étant prévue pour l'alimentation et une conduite (10) pour l'évacuation du fluide cryogénique contenu dans le récipient intérieur (1) et au moins une conduite (10) étant prévue pour l'alimentation et une conduite (10) pour l'évacuation d'un fluide de régulation de température.

2. Réservoir cryogénique selon la revendication 1, **caractérisé en ce que** la poche (4) est formée au moins partiellement par un tube enveloppe (8) qui s'étend à l'intérieur du récipient intérieur (1) et/ou **en ce que** la poche (4) est au moins partiellement de forme cylindrique.

3. Réservoir cryogénique selon au moins une des revendications précédentes,
**caractérisé en ce que** la poche (4) est fermée par un couvercle (9).

4. Réservoir cryogénique selon au moins une des revendications précédentes,
**caractérisé en ce qu'**une alimentation du milieu cryogénique contenu dans le récipient intérieur (1), en particulier de l'hydrogène, vers un composant fonctionnel (5) dans la poche (4) s'effectue par une conduite (10) depuis l'extérieur du récipient intérieur (1), à savoir depuis l'espace sous vide (3) ou depuis l'espace situé à l'extérieur du récipient extérieur (2), à travers le couvercle (9) de la poche.

5. Réservoir cryogénique selon la revendication 4, **caractérisé en ce que** toutes les conduites (10) qui mènent de l'extérieur de la poche (4) à un composant fonctionnel (5) agencé dans la poche (4) passent par une ouverture dans le couvercle (9) de la poche (4), de préférence par une ouverture dans le couvercle (9) de la poche (4) associée à la conduite (10) correspondante.

6. Réservoir cryogénique selon au moins une des revendications précédentes,
**caractérisé en ce que** la poche (4) est orientée parallèlement à l'axe longitudinal médian du réservoir cryogénique ou est orientée perpendiculairement à l'axe longitudinal médian du réservoir cryogénique.

7. Réservoir cryogénique selon la revendication 6, **caractérisé en ce que** la poche (4) est agencée coaxialement à l'axe longitudinal médian du réservoir cryogénique.

8. Réservoir cryogénique selon au moins une des revendications précédentes,
**caractérisé en ce que** la poche (4) s'étend jusqu'au récipient extérieur (2), et/ou **en ce que** la poche (4) est conçue de manière à suspendre le récipient intérieur (1) au récipient extérieur (2).

9. Réservoir cryogénique selon au moins une des revendications précédentes,
**caractérisé en ce que** la poche (4) s'étend vers l'intérieur à partir d'un capuchon d'extrémité frontal (1.2) du récipient intérieur (1) ou d'une surface d'enveloppe (1.1) du récipient intérieur (1), de préférence en direction d'un point central du récipient intérieur (1).

10. Réservoir cryogénique selon au moins une des revendications précédentes,
**caractérisé en ce qu'**au moins un composant fonctionnel (5) est agencé dans la poche (4) de telle sorte que le composant fonctionnel (5) soit essentiellement parallèle à une paroi latérale de la poche (4), en particulier au moins un échangeur de chaleur (6) sensiblement cylindrique et/ou au moins un tube (7).

11. Réservoir cryogénique selon au moins une des revendications précédentes,
**caractérisé en ce que** la poche (4) présente une isolation thermique pour protéger les composants fonctionnels (5) agencés dans la poche (4), en particulier une isolation multicouche (MLI).
